# EUROPÄISCHE PATENTSCHRIFT

(11) **EP 3 820 792 B1**
(45) Veröffentlichungstag und Bekanntmachung des Hinweises auf die Patenterteilung: **29.01.2025**
(21) Anmeldenummer: 20736642.8
(22) Anmeldetag: 01.07.2020
(51) Int. Cl.: B65G 1/137, G06Q 10/08

(54) **LAGERREGAL ZUR LAGERUNG MINDESTENS EINES LAGERGUTTRÄGERS UND VERFAHREN ZUM ERFASSEN EINES LAGERBESTANDS EINES LAGERREGALS**
STORAGE SHELF FOR STORING AT LEAST ONE STORAGE PRODUCT CARRIER AND METHOD FOR DETECTING A STORAGE STOCK OF A STORAGE SHELF
RAYONNAGE DE STOCKAGE POUR LE MONTAGE D'AU MOINS UN SUPPORT DE PRODUITS DE STOCKAGE ET PROCÉDÉ DE DÉTECTION DU NIVEAU DE STOCK D'UN RAYONNAGE DE STOCKAGE

(30) Priorität: 04.07.2019 DE 102019118046
(43) Veröffentlichungstag der Anmeldung: 19.05.2021
(73) Patentinhaber: HÄNEL & CO., 9450 Altstätten SG (CH)
(72) Erfinder: REMINDER, Manfred, 74653 Ingelfingen (DE)
(74) Vertreter: Flügel Preissner Schober Seidel
(86) Internationale Anmeldenummer: PCT/EP2020/068538
(87) Internationale Veröffentlichungsnummer: WO 2021/001432

(56) Entgegenhaltungen:
- EP-A1- 2 700 596
- WO-A1-2016/012877
- WO-A2-2008/003683
- DE-A1- 102008 018 436
- US-A1- 2018 319 594
- US-B2- 10 029 857

## Beschreibung

Die Erfindung betrifft ein Lagerregal mit einer Vielzahl von übereinander angeordneten Trägerstützen zur Abstützung von Lagergutträgern, die mittels einer automatischen Transportvorrichtung förderbar sind, mit mindestens einer Beschickungs- und Entnahmeöffnung zur Zuführung und Entnahme des Lagergutträgers, wobei an einer Oberseite der Beschickungs- und Entnahmeöffnung, eine Bilderfassungseinheit angeordnet ist. Weiterhin betrifft die Erfindung ein Verfahren zur Erfassung eines Lagerbestands eines Lagerregals. Ein Lagerregal der eingangs genannten Art ist aus der DE 10 2008 018 436 A1 und der WO 2008/003683 A2 bekannt. WO 2008/003683 A2 offenbart den Oberbegriff des Anspruchs 1. Bei derartigen Lagerregalen wird zur Beschickung und Entnahme von Lagergut ein Lagergutträger aus einem der Lagerplätze mittels einer Transportvorrichtung automatisch zur Beschickungs- und Entnahmeöffnung verfahren. Der Lagerist kann dann auf dem Lagergutträger das einzulagernde Lagergut ablegen. Anschließend kann der Lagerist manuell den Lagerplatz und weitere Informationen zu dem Lagergut in einem System erfassen. Abschließend wird der Lagergutträger mit dem Lagergut mittels der Transportvorrichtung automatisch zu einem Lagerplatz verfahren und dort bis zur Entnahme eingelagert. An der Oberseite der Beschickungs- und Entnahmeöffnung ist eine Bilderfassungseinheit zur Aufnahme eines Bildes des Lagergutträgers befestigt. Insbesondere bei großflächigen Lagergutträgern kann Lagergut im Randbereich des Lagergutträgers nur bedingt durch eine derartig angebrachte Bilderfassungseinheit erfasst werden. Des Weiteren ist die Distanz des Lagerguts zur Bilderfassungseinheit abhängig von dem Ablageort, sodass ein direkter Vergleich der geometrischen Maße des Lagerguts nur bedingt möglich ist.

DE 10 2007 004 866 A1 offenbart ein Lagerregal mit einer Anzeigeeinrichtung an der Oberseite einer Beschickungs- und Entnahmeöffnung, die einen Lagergut auf einer Lagerfläche des Lagergutträgers mittels Leuchtelementen anzeigt.

Ein weiteres automatisiertes Warenlager ist aus WO 2016/012877 A1 bekannt. Das offenbarte Warenlager weist einen Träger mit einer Vielzahl an Trägerstützen, welche jeweils ein Tablar aufnehmen können, auf. Über eine Bedienöffnung kann ein Bediener Waren in einen Bedienbereich einlegen oder herausnehmen. Die Bedienöffnung ist ferner derart gestaltet, dass ein Tablar eingeführt oder auch herausgenommen werden kann. An einer Oberseite des Bedienbereichs ist ein sogenanntes Laseranzeigesystem angeordnet, das geeignet ist, wenigstens einen punktartigen Laserstrahl und einen Laserstrahl zu erzeugen, um eine Ware zu lokalisieren.

Aus EP 2 700 596 A1 ist ein Kommissioniersystem bekannt. Das Kommissioniersystem umfasst ein Regal mit einer offenen Regalfront und einer Vielzahl an frontseitig zugänglichen Regalfächern. Vor dem Regal befindet sich ein Kommissionierfahrzeug mit einer Mehrzahl an Behältnisaufnahmen zur Aufnahme einer Mehrzahl an Behältnissen. Oberhalb des Fahrwegs ist eine Schiene angeordnet, an welcher eine optische Leitvorrichtung hängend und längs der Schiene entlang der Ausrichtung verfahrbar gelagert ist. An der Unterseite der optischen Leitvorrichtung sind drei Punktstrahler zur Aussendung dreier Lichtstrahlen angeordnet, die einem nicht dargestellten Kommissionierer die für die Durchführung eines Kommissioniervorgangs notwendigen Informationen vorgeben.

US 10 029 857 B2 offenbart eine Laserdetektiervorrichtung, die durch das Aussenden Laserstrahlen eine Oberfläche abtasten kann, um somit einen Lagerort zu erkennen.

Aus US 2018/319594 A1 ist ein Gabelstapler bekannt, der zur Erkennung eines Ablageorts in einem Regal eine Vielzahl an Kameras aufweist.

Insbesondere bei Hochregallager ergibt sich häufig die Problematik, dass eine exakte, visuelle Erfassung des Lagerbestands nur mit einem hohen personellen Aufwand möglich ist. Dabei muss beispielsweise zur Überprüfung des Lagerbestands oder zur Erstellung einer Inventur jeder Lagergutträger einzeln ausgelagert und nach der Erfassung des Bestands, wie die Füllmenge eines Kleinteilbehälters, wieder eingelagert werden. Des Weiteren muss bei der Bestückung und/oder Entnahme Lagergut separat erfasst werden. Dadurch reduziert sich die Effizienz während der Bestückung und/oder Entnahme von Lagergut.

Der Erfindung liegt die Aufgabe zugrunde, ein Lagerregal anzugeben, bei dem die Erfassung des Lagerbestands mittels präzise erfassten Bilder einer Bilderfassungseinheit in einer Beschickungs- und Entnahmeöffnung geschaffen wird. Des Weiteren wird ein Verfahren zum Erfassen eines Lagerbestands eines Lagerregals vorgeschlagen, welches eine automatische und präzise Bilderfassung bei der Beschickung und/oder Entnahme von Lagergut ermöglicht.

Zur Lösung der Aufgabe wird ein Lagerregal der eingangs genannten Art vorgeschlagen, bei der die Bilderfassungseinheit und eine Leuchtvorrichtung an einer Verfahrvorrichtung befestigt sind, die in einer ersten Horizontalrichtung und einer zweiten Horizontalrichtung verfahrbar ist. Ferner ist die Leuchtvorrichtung zur Hervorhebung und Ausleuchtung eines Bereichs des Lagergutträgers, der von der Bilderfassungseinheit erfasst wird, ausgebildet.

Das erfindungsgemäße Lagerregal zeichnet sich insbesondere dadurch aus, dass kleineres Lagergut neben größerem Lagergut unverdeckt aus der Vogelperspektive erfasst wird, da die Bilderfassungseinheit mittels der Verfahrvorrichtung mittig über einem Lagergut positioniert wird. Somit wird eine verdeckungsfreie Aufnahme des Lagerguts geschaffen. Insbesondere kann dadurch kleines Lagergut erfasst werden, das neben einem großen Lagergut abgelegt ist.

Da der Abstand von der Bilderfassungseinheit zu dem Lagergutträger immer gleichbleibend ist, können die erfassten Bilder relativ zueinander verglichen werden und beispielsweise geometrische Maße des Lagerguts automatisch zueinander eingeordnet und bestimmt werden.

Vorteilhaft ist die Bilderfassungseinheit zur Aufnahme eines Bildes im Wesentlichen senkrecht zu einer Lagerfläche des Lagergutträgers ausgerichtet. Somit ist ein gleichbleibender Winkel zur Aufnahme eines Bildes aus der Vogelperspektive gewährleistet.

In einer vorteilhaften Ausgestaltung ist die Verfahrvorrichtung in einer zweiten Horizontalrichtung (Y) verfahrbar. Somit kann die Verfahrvorrichtung über den gesamten Arbeitsbereich verfahren und die Bilderfassungseinheit auch in tiefen Beschickungs- und Entnahmeöffnungen die Bilderfassungseinheit über ein Lagergut positionieren.

Vorteilhaft ist die Verfahrvorrichtung an orthogonal zueinander angeordneten Schienen angeordnet, wobei vorzugsweise die Verfahrvorrichtung entlang der Schienen mittels eines Motors positionierbar ist. Des Weiteren ist es denkbar, die Verfahrvorrichtung auch über eine Zugvorrichtung, die die Verfahrvorrichtung entlang der Schienen zieht, zu positionieren. In einer vorteilhaften Ausgestaltung wird die Position der Verfahrvorrichtung mittels eines Bewegungsaufnehmers, insbesondere eines Seilzug-Sensors, ein Differentialtransformators oder eines geregelten Motors, erfasst. Somit ist eine präzise Bestimmung der Position der Verfahrvorrichtung möglich.

Vorteilhaft weist die Bilderfassungseinheit ein Objektiv mit einer festen Brennweite auf. Aufgrund des Objektivs mit einer festen Brennweite und dem konstant gehaltenen Abstand der Bilderfassungseinheit zu dem Arbeitsbereich, können die geometrischen Maße des Lagerguts visuell verglichen werden. Das Objektiv kann hierfür auch mit einem Sensor versehen werden, der die Einstellung der Bilderfassungseinheit und die Position der Verfahrvorrichtung erfasst, sodass mittels der erfassten Einstellung, Position der Verfahrvorrichtung und Abstands zum Arbeitsbereich, die Größe des Lagerguts berechnet werden kann. Die Maßeinheit des Bildes ist somit auch bei einer verstellbaren Brennweite bekannt, sodass das Lagergut zueinander verglichen werden kann.

Vorteilhaft ist eine Leuchtvorrichtung vorgesehen, welche mindestens den Teil der Lagerfläche beleuchtet, welchen die Bilderfassungseinheit erfasst. Somit werden Bereiche, die von der Bilderfassungseinheit erfasst werden, ausgeleuchtet, sodass eine detaillierte Aufnahme gemacht werden kann. Dies ist beispielsweise bei tiefen Behältern vorteilhaft, die einen geringen Füllstand haben. Dabei wird das enthaltene Lagergut durch die Wände des Behälters gegenüber einer zentral angebrachten Beleuchtung verdeckt, was bei der erfindungsgemäßen Anordnung der Beleuchtung nicht der Fall ist. Somit können qualitativ hochwertige Bilder erstellt werden. Die Leuchtelemente können insbesondere LED sein. Ein weiterer Vorteil ist, dass mittels einer solchen Leuchtvorrichtung eine zuverlässige, verdeckungsfreie Anzeige des Lagerguts möglich ist.

In einer vorteilhaften Ausgestaltung ist die Bilderfassungseinheit zentral auf der Verfahrvorrichtung angeordnet. Zweckmäßigerweise sind die Leuchtelemente der Leuchtvorrichtung um die Bilderfassungseinheit herum angebracht. In einer weiteren vorteilhaften Ausgestaltung können diese in einem gleichmäßigen Abstand zueinander um die Bilderfassungseinheit herum angeordnet sein. Aufgrund der um die Bilderfassungseinheit herum angeordneten Leuchtelemente ist eine homogene Erhellung des Lagerguts möglich, da die Lichtelemente aus verschiedenen Winkel, um die Bilderfassungseinheit herum, das Lagergut erleuchten. Es ergibt sich somit eine nur geringe Schattenbildung.

Vorteilhaft leuchtet die Leuchtvorrichtung einen ersten Bereich der Lagerfläche an, vorzugsweise mittels eines roten Lichts zur Hervorhebung des ersten Bereichs, oder vorzugsweise mittels eines weißen Lichts zur Beleuchtung des ersten Bereichs. Auf diese Weise kann ein Bereich dem Lageristen kenntlich gemacht werden, der beispielsweise ein Lagergut enthält, welcher eingelagert werden soll. Neben dem ersten Bereich kann auch beispielhaft ein zweiter, dritter, vierter oder fünfter Bereich vorhanden sein. Der jeweilige Bereich befindet sich auf der Lagerfläche eines Lagergutträgers. Durch Anleuchten eines Bereichs kann beispielsweise entweder durch ein weises Licht die Identifikation eines Lagerguts dem Lageristen erleichtert werden oder durch ein rotes Licht ein Ablageort dem Lagerrist angezeigt werden.

Vorteilhaft weist das Lagerregal eine Bildauswertevorrichtung auf, die Bilder mehrerer Bereiche zu einem Gesamtbild zusammenfügt, welche mindestens einen ersten Bereich und einen zweiten Bereich umfassen, die aus verschiedenen Positionen der Verfahrvorrichtung mittels der Bilderfassungseinheit aufgenommen wurden.

Dadurch ergibt sich der Vorteil, dass ein Gesamtbild eines Lagergutträgers geschaffen wird, welches sich aus mehreren Bereichen zusammensetzt, die jeweils Bilder von Lagergüter aus einer Vogelperspektive zeigen. Eine präzise, verdeckungsfreie Darstellung des gesamten Lagergutträgers ist somit möglich. Es ist ebenfalls denkbar, dass insbesondere dadurch größeres Lagergut mittels mehrerer erfassten Bilder, die über die Bildauswertevorrichtung zusammengesetzt werden, erstellt werden können. Des Weiteren kann die Bildauswertevorrichtung ebenfalls die erfassten Daten der Bilderfassungseinheit und der Verfahrvorrichtung mit dem erfassten Bild koppeln, sodass detaillierte Informationen zu der Position, Größe und andere Informationen gespeichert werden.

Beispielsweise kann ein Gesamtbild des Lagergutträgers mittels eines Displays dem Lagerristen angezeigt werden. Auf diese Weise kann auch zum Beispiel dem Lageristen über das Bild der Bereich angezeigt werden, an dem sich das Lagergut befindet, das zu entnehmen ist. Des Weiteren können die Bilder des Lagerguts aktualisiert werden, sobald eine Beschickung oder Entnahme durchgeführt wurde, ohne dass dabei ein neues Gesamtbild des Lagergutträgers erstellt werden muss. Dadurch ist immer ein aktuelles Abbild des Lagergutträgers gespeichert.

Des Weiteren wird zur Lösung der Aufgabe ein Verfahren zum Erfassen eines Lagerbestands eines Lagerregals, insbesondere eines Lagerregals der zuvor genannten Art, vorgeschlagen. Das Verfahren weist folgende Schritte auf:
a. Positionieren eines Lagergutträgers in eine Beschickungs- und/oder Entnahmeöffnung eines Lagerregals;
b. Verfahren einer Bilderfassungseinheit über einen Bereich des Lagergutträgers, in welchen ein Einlegen oder aus welchem ein Entnehmen von Lagergut erfolgt;
c. Ausleuchten des Bereichs;
d. Aufnehmen eines Bildes des Bereichs;
e. Abspeichern, verarbeiten und auswerten des Bildes.

Mittels des Verfahrens ist es möglich, Lagergut, das sich auf einem Lagergutträger befindet, aus der Vogelperspektive zu erfassen. Ebenfalls wird immer ein aktuelles Bild des eingelagerten Lagerguts gespeichert. Besonders vorteilhaft ist dabei, dass diese Information über eine zentrale Bildauswertevorrichtung in Verbindung mit einer intelligenten Lagerverwaltungssoftware mit integrierter Datenbank abgerufen werden kann, auf welcher die erfassten Daten gespeichert werden.

Vorteilhaft erfasst die Bilderfassungseinheit Bilder mittels einer gleichbleibenden Brennweite und/oder einer gleichleibenden Ausrichtung. Somit können Bilder aufgenommen werden, die in der Größe vergleichbar zu den bereits zuvor aufgenommenen Bildern sind. Lagergut kann dadurch in der Größe zueinander über die Bilder verglichen werden.

In einer weiteren vorteilhaften Ausgestaltung wird die Größe des erfassten Lagerguts berechnet. Somit kann die Bilderfassungseinheit auch ein Objektiv mit einer sich ändernden Brennweite umfassen. Für die Berechnung kann ein Sensor an dem Objektiv vorhanden sein, oder ein Referenzpunkt auf der Ablagefläche abgebildet sein, sodass darüber die Anzahl an Pixel, bzw. Bildpunkte eines digitalen Bilds, entlang einer über die definierte Größe des Referenzpunkts bestimmtes Maß definiert wird.

Vorteilhaft schneidet die Bildauswertevorrichtung das erfasste Bild des Bereichs derart zu, dass mindestens ein Ablagebereich abgebildet wird. Somit können Bilder der Ablagebereiche nebeneinander angeordnet werden, ohne dass sich Teile der aufgenommenen Bereiche überschneiden.

Vorteilhaft erstellt die Bildauswertevorrichtung vorzugsweise ein Gesamtbild des Lagergutträgers durch eine Vielzahl an Abbildungen der Ablagebereiche. Mittels des beschriebenen Verfahrens ist es möglich, ein aktuelles Gesamtbild des Lagergutträgers zu erstellen, sodass auf der Speichereinheit, die in der Bildauswertevorrichtung umfasst ist, immer ein aktuelles Bild des Lagerbestands gespeichert ist. Zur Vereinfachung der Lagerplatzfindung und der Darstellung bei Einlagerungen, werden die einzelnen Bilder des aufgenommenen Lagergutes immer in ein "Rechteck" gefasst. Somit kann dem Lagerrist der aktuelle Bestand auf dem Lagergutträger über einen Bildschirm, der mit einer Lagerverwaltungssoftware gekoppelt ist, vorab angezeigt werden.

Vorteilhaft wird ein freier Ablagebereich auf dem Lagergutträger in dem Gesamtbild des Lagergutträgers visuell gekennzeichnet. Dadurch erweist sich der Vorteil, dass dem Lageristen verständlich und einfach angezeigt wird, zu welchem Bereich das Lagergut zu transportieren ist, um diesen abzulegen. Ebenfalls wird dem Lageristen anschaulich verdeutlicht, welche Bereiche bereits belegt sind, beziehungsweise, welche Bereiche unbelegt sind. Eine solche Kennzeichnung kann durch einen schraffierten Bereich, aber auch durch eine farbige, transparente Fläche umgesetzt werden, welche über das Bild gelegt wird. Es wäre des Weiteren denkbar, diese Kennzeichnung durch eine Änderung der Helligkeit des Bereichs umzusetzen, aber auch dadurch, dass der Rand des Bereichs mit einem Rahmen versehen wird, der eine Kennzeichnung oder Hervorhebung ermöglicht.

Vorteilhaft wird mittels Bilderkennung ein Lagergut in dem Ablagebereich identifiziert und eine Information zu dem Lagergut wird an einer Anzeigeeinheit angezeigt. Die Bilderkennung ermöglicht eine automatische Erfassung des Lagerguts, somit können dadurch automatisch Informationen und Beschreibungen in einem System mit dem erstellten Bild verbunden und gespeichert werden. Die Informationen können beispielhaft die Anzahl des Lagerguts in diesem Ablagebereich, einen Füllzustand eines Kleinteilbehälters, insbesondere eine Box, welche Schrauben enthält, aber auch Informationen zu einem Motorblock, wie zum Beispiel die Größe, Umfang oder andere Merkmale, wie Typnummer oder Seriennummer, enthalten.

Vorteilhaft wird eine Inventurliste automatisch erstellt oder vorzugsweise nach dem Beschicken und oder Entnehmen von Lagergut aktualisiert. Dadurch ergibt sich der Vorteil, dass die Inventurliste immer den aktuellen Bestand aufweist. Ebenfalls kann ein solcher Prozess automatisiert erfolgen und Bestände können somit regelmäßig überprüft werden. Zudem ist es über die Bilderkennung möglich, fasch abgelegtes oder nicht gebuchtes Lagergut zu ermitteln. Dabei wird manuell oder automatisiert jeder Lagergutträger in die Entnahmeöffnung gefahren um eine Gesamtaufnahme des Lagergutträgers zu erstellen. Diese Aufnahme wird mit den bereits gespeicherten Informationen verglichen. Bei Abweichungen kann für den entsprechenden Lagergutträger ein Inventurauftrag (Zählvorschlag) erstellt werden. Zweckmäßigerweise wird eine Inventur in einem Zeitraum durchgeführt, in welcher keine Beschickung und/oder Entnahme erfolgt oder zu erwarten ist, insbesondere während eines Betriebsschlusses.

Nachfolgend wird ein Lagerregal näher erläutert, welches in schematischer Weise in den beigefügten Zeichnungen dargestellt ist. Hierbei zeigen:
- Fig. 1: eine Darstellung eines erfindungsgemäßen Lagerregals;
- Fig. 2: eine Verfahrvorrichtung, die an einer Oberseite der Beschickungs- und Entnahmeöffnung des Lagerregals angeordnet ist;
- Fig. 3: Draufsicht auf einen Lagergutträger;
- Fig. 4: Flussdiagramm zu einem erfindungsgemäßen Verfahren zur Erfassung eines Lagerbestands eines Lagerregals.

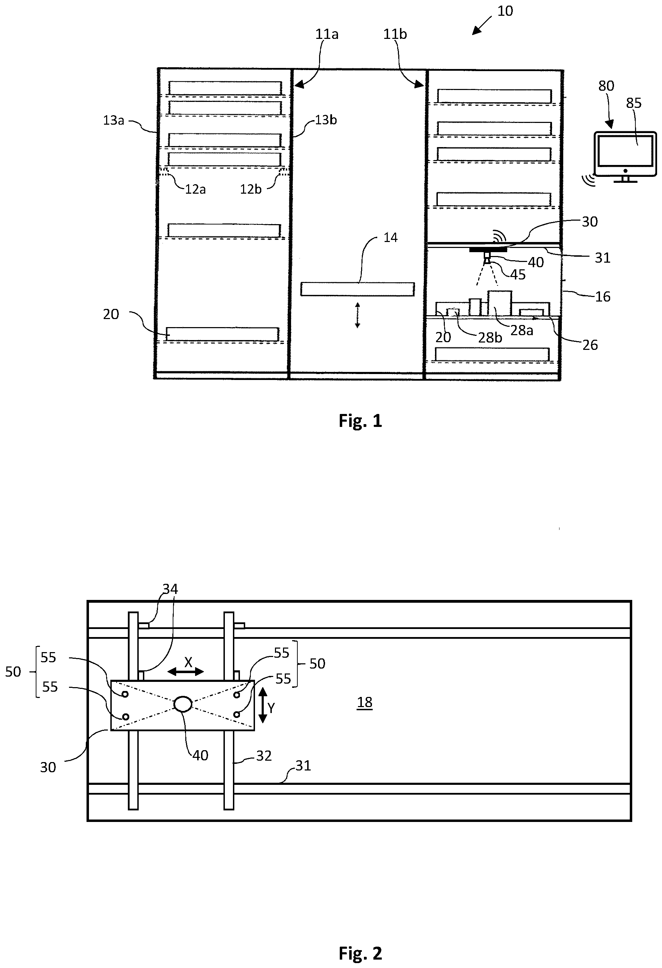

Das in Fig. 1 dargestellte Lagerregal 10 zur Lagerung einer Vielzahl von Lagergutträgern 20 weist zwei mit Abstand zueinander angeordnete Module 11a, 11b auf. Die Module 11a, 11b weisen eine Vielzahl von beabstandeten, paarweise angeordnete Trägerstützen 12a, 12b auf, die an gegenüberliegenden Seitenwänden 13a, 13b angeordnet sind. Die Trägerstützen 12a, 12b dienen der Abstützung von trogförmig ausgebildeten Lagergutträgern 20, in denen das Lagergut 28 aufgenommen wird. Somit bilden die Trägerstützen 12a, 12b eine Vielzahl von Lagerplätzen zur Abstützung der Lagergutträger 20.

Das Lagergut 28 befindet sich auf einem Ablagebereich 26 einer Lagerfläche 25 des Lagergutträgers 20. Lagergut 28 können Kleinteilbehälter, wie zum Beispiel eine Vielzahl an Schrauben, aber auch Einzelteile, wie zum Beispiel Motorteile, umfassen. Ein großes Lagergut 28a ragt höher als ein kleines Lagergut 28b von dem Lagergutträger 20 ab.

Zwischen den Modulen 11a, 11b ist eine Transportvorrichtung 14 angeordnet, welche den Lagergutträger 20 zwischen der Beschickungs- und Entnahmeöffnung 16 und einem Lagerplatz in den Modulen 11a, 11b automatisch verfährt. Das Lagerregal 10 kann auch beispielhaft eine zweite Beschickungs- und/oder Entnahmeöffnung 16, die in Fig. 1 nicht dargestellt ist, aufweisen.

Eine Bildauswertevorrichtung 80 und ein Display 85 sind dem Lagerregal 10 zugeordnet.

In der Beschickungs- und/oder Entnahmeöffnung 16 kann ein Lagergutträger 20 positioniert werden. Auf dem Lagergutträger 20 kann Lagergut 28 abgelegt oder entnommen werden. An einer Oberseite 18 der Beschickungs- und Entnahmeöffnung 16 ist eine Bilderfassungseinheit 40 zur Erfassung des auf den Lagergutträger 20 abgelegten Lagergutes 28 angeordnet. Die Bilderfassungseinheit 40 ist an einer Verfahrvorrichtung 30 befestigt.

Die Verfahrvorrichtung 30 ist an zwei orthogonal zueinander angeordneten Schienen 31, 32 gelagert, wie in Fig. 2 dargestellt ist. Die Schienen 31, 32 sind an der Oberseite 18 der Beschickungs- und/oder Entnahmeöffnung 16 angeordnet. Die Verfahreinheit 30 kann entlang der ersten Horizontalrichtung X über Schienen 31 und der zweiten Horizontalrichtung Y über Schienen 32 der Beschickungs- und/oder Entnahmeöffnung 16 verfahren werden, sodass der gesamte Lagergutträger 20 durch die Bilderfassungseinheit 40 erfasst werden kann. Die Verfahrvorrichtung 30 wird hierzu beispielhaft mittels eines Motors 34 positioniert.

An der Verfahrvorrichtung 30 ist mittig die Bilderfassungseinheit 40 mit einem Objektiv 45 fixiert. Die Bilderfassungseinheit 40 ist im Wesentlichen senkrecht zum Lagergutträger 20 hin ausgerichtet. Somit wird das Lagergut 28 aus einer Vogelperspektive erfasst. Insbesondere kann dadurch größeres Lagergut 28b beispielsweise kleines Lagergut 28a nicht verdecken.

Die Bilderfassungseinheit 40 ist in der dargestellten Ausgestaltung nicht verstellbar, sodass die Ausrichtung gleichbleibend ist. In Kombination mit einer gleichbleibenden Brennweiteneinstellung des Objektivs 45 und einer konstanten Ausrichtung können somit vergleichbare Aufnahmen erstellt werden.

Um die Bilderfassungseinheit 40 herum sind Leuchtelemente 55 einer Leuchtvorrichtung 50 angeordnet. Diese Leuchtelemente 55 sind in einer vorteilhaften Ausgestaltung gleichmäßig um das Objektiv 45 der Bilderfassungseinheit 40 angeordnet. Die Leuchtelemente 55 sind dabei auf denselben Bereich hin ausgerichtet, der von der Bilderfassungseinheit 40 erfasst wird.

Die Bildauswertevorrichtung 80 verarbeitet alle Daten, die während einer Beschickung und/oder Entnahme erfasst werden. Die Bildauswertevorrichtung 80 umfasst ebenfalls eine Speichereinheit, die die erfassten Daten abspeichert.

Des Weiteren kann die Bildauswertevorrichtung 80 mit der Bilderfassungseinheit 40 mittels einer drahtlosen Verbindung gekoppelt werden.

Das Display 85 beschreibt eine Anzeigeeinheit, über die einem Lagerristen Informationen zu einem Beschickungs- und/oder Entnahmeauftrag angezeigt werden können. Insbesondere sind unter Informationen ein Gesamtbild des Lagergutträgers 20, Buchungsinformationen, Materialnummer, bewegte Menge, Benutzer, Zeit und Datum usw. in Tabellenform zu verstehen.

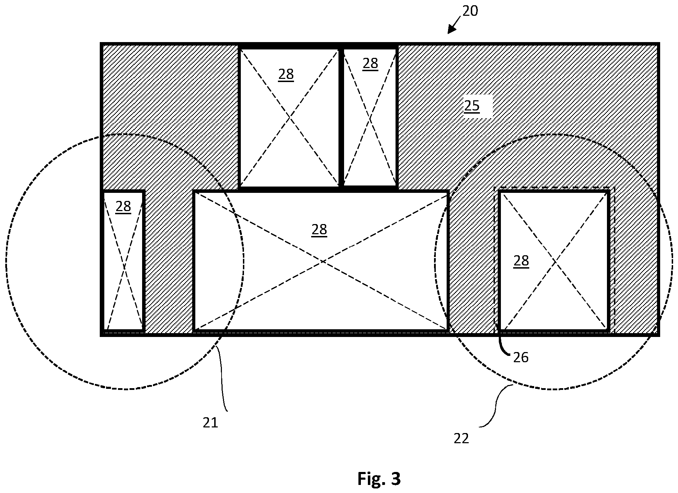

In Fig. 3 ist beispielhaft ein erfasstes Gesamtbild eines Lagergutträgers 20 dargestellt. Die Bilderfassungseinheit 40 nimmt hierzu mindestens einen ersten Bereich 21 und/oder einen zweiten Bereich 22 auf. Es können auch eine Vielzahl von Bereichen 21, 22 des Lagergutträgers 20 erfasst werden. Jeder Bereich 21, 22 umfasst mindestens einen Ablagebereich 26. Zur Erfassung der Bereiche 21, 22 ist die Bilderfassungseinheit 40 mittig über dem Ablagebereich 26 angeordnet.

In einer möglichen Ausgestaltung kann ein Ablagebereich 26 auch mittels zwei durch die Bildauswertevorrichtung 80 zusammengesetzte, erfasste Bereiche 21, 22 dargestellt werden. Der erfasste erste Bereich 21 kann mittels der Bildauswertevorrichtung 80 derart zugeschnitten werden, dass nur der Ablagebereich 26 auf dem gespeicherten Bild sichtbar ist, der in Figur 3 beispielhaft von einem Lagergut 28 belegt ist.

Das Gesamtbild des Lagergutträgers 20 wird somit durch eine Vielzahl von Ablagebereichen 26 dargestellt, die nach einer Beschickungs- und/oder Entnahmetätigkeit jeweils einzeln erneuert werden können. Ebenfalls können nicht belegte Lagerfläche 25 des Lagergutträgers 20 gekennzeichnet werden. Insbesondere, wie in der Fig. 3 dargestellt, mittels einer schraffierten Fläche.

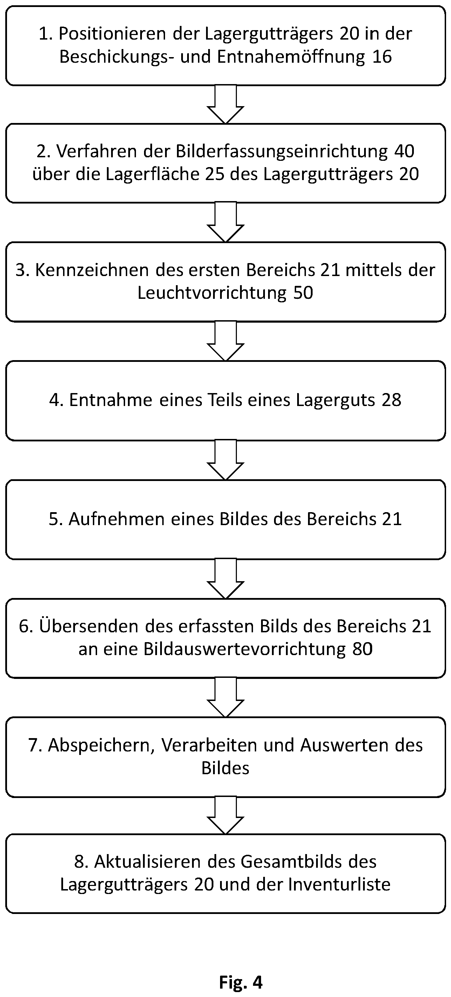

Fig. 4 zeigt anhand eines Flussdiagramms beispielhaft die einzelnen Verfahrensschritte bei einer Entnahme eines Lagerguts aus dem zuvor beschriebenen Lagerregal 10.

In einem ersten Schritt wird ein Lagergutträger 20 mit einem zu entnehmenden Lagergut 28 in eine Beschickungs- und Entnahmeöffnung 16 positioniert, nachdem der Lagerrist eine entsprechende Buchung für eine Entnahme eines Lagerguts 28 veranlasst hat.

In einem nächsten Schritt wird die Bilderfassungseinheit 40 mittig über den Ablagebereich 26 des Lagergutträgers 20 positioniert, welche ein zu entnehmendes Lagergut 28 umfasst.

Folgend wird der erste Bereich 21, der den Ablagebereich 26 mit dem Lagergut 28 aufweist, mittels eines Leuchtelements 55 gekennzeichnet, sodass dem Lagerristen der Lagerort des Lagerguts 28 in der Beschickungs- und Entnahmeöffnung 16 angezeigt wird.

Der Lagerrist entnimmt beispielhaft nur einen Teil des Lagerguts 28, z. B. eine Schraube, aus einem Behälter, der auf einem Ablagebereich 26 auf dem Lagergutträger 20 steht.

Die Bilderfassungseinheit 40 nimmt anschließend ein neues Bild des ersten Bereichs 21 auf, welcher den Ablagebereich 26 mit dem Lagergut 28 umfasst.

Das aufgenommene Bild wird anschließend an eine Bildauswertevorrichtung 80 übermittelt.

Die Bildauswertevorrichtung 80 speichert das Bild und schneidet das erfasste Bild auf den Ablagebereich 26 derart zu, dass nur noch das Lagergut 28 sichtbar ist. Der neue Füllstand des Behälters wird dabei erfasst und ebenfalls abgespeichert.

Zuletzt werden die erfassten neuen Informationen in einer Inventurliste eingepflegt und der den Ablagebereich 26 umfassenden Teil des Gesamtbilds des Lagergutträgers 20 oder Lagerfläche 25 wird aktualisiert.

Die Erfindung zeichnet sich insbesondere dadurch aus, dass eine verdeckungsfreie Aufnahme des Lagergutes 28 einfach und präzise möglich ist. Des Weiteren wird nur noch eine Bilderfassungsvorrichtung 40 benötigt.

Mittels einer derartigen Vorrichtung und/oder eines Verfahrens kann somit eine effiziente Lagerung von Lagergut 28 geschaffen werden. Ebenfalls ist es möglich, vollautomatisiert eine Inventurliste zu erstellen, wobei eine exakte und aktuelle Erfassung des Lagerbestands gewährleistet wird.

**Bezugszeichenliste**

| | | | |
|---|---|---|---|
| 10 | Lagerregal | | |
| 11a | Modul | 30 | Verfahrvorrichtung |
| 11b | Modul | 31 | Schiene |
| 12a,b | Trägerstützen | 32 | Schiene |
| 13a,b | Seitenwand | 34 | Motor |
| 14 | Transportvorrichtung | | |
| 16 | Beschickungs- und/oder Entnahmeöffnung | 40 | Bilderfassungseinheit |
| | | 45 | Objektiv |
| 18 | Oberseite | 50 | Leuchtvorrichtung |
| 20 | Lagergutträger | 55 | Leuchtelement |
| 21 | erster Bereich | | |
| 22 | zweiter Bereich | 80 | Bildauswertevorrichtung |
| 25 | Lagerfläche | 85 | Display |
| 26 | Ablagebereich | | |
| 28 | Lagergut | X | erste Horizontalrichtung |
| 28a | großes Lagergut | Y | zweite Horizontalrichtung |
| 28b | kleines Lagergut | | |

## Patentansprüche

1. Lagerregal (10) mit einer Vielzahl von übereinander angeordneten Trägerstützen (12) zur Abstützung von Lagergutträgern (20), die mittels einer automatischen Transportvorrichtung (14) förderbar sind, mit mindestens einer Beschickungs- und Entnahmeöffnung (16) zur Zuführung und Entnahme des Lagergutträgers (20), wobei an einer Oberseite (18) der Beschickungs- und Entnahmeöffnung (16), eine Bilderfassungseinheit (40) angeordnet ist, **dadurch gekennzeichnet, dass** das Lagerregal (10) eine Leuchtvorrichtung (50) zur Hervorhebung und Ausleuchtung eines Bereichs (21) des Lagergutträgers (20) aufweist, der von der Bilderfassungseinheit (40) erfasst wird, und wobei die Bilderfassungseinheit (40) und die Leuchtvorrichtung (50) an einer Verfahrvorrichtung (30) befestigt sind, die in einer ersten Horizontalrichtung (X) und in einer zweiten Horizontalrichtung (Y) verfahrbar ist.

2. Lagerregal nach Anspruch 1, **dadurch gekennzeichnet, dass** die Bilderfassungseinheit (40) zur Aufnahme eines Bildes im Wesentlichen senkrecht zu einer Lagerfläche (25) des Lagergutträgers (20) ausgerichtet ist.

3. Lagerregal nach Anspruch 1 oder 2, **dadurch gekennzeichnet, dass** die Verfahrvorrichtung (30) an orthogonal zueinander angeordneten Schienen (31, 32) angeordnet ist, wobei vorzugsweise die Verfahrvorrichtung (30) entlang der Schienen (31, 32) mittels eines Motors (34) positionierbar ist.

4. Lagerregal nach einem der Ansprüche 1 bis 3, **dadurch gekennzeichnet, dass** die Bilderfassungseinheit (40) ein Objektiv (45) mit einer festen Brennweite aufweist.

5. Lagerregal nach Anspruch 4, **dadurch gekennzeichnet, dass** die Leuchtvorrichtung (50) den ersten Bereich (21) der Lagerfläche (25)mittels eines roten Lichts zur Hervorhebung des ersten Bereichs (21) oder mittels eines weißen Lichts zur Beleuchtung des ersten Bereichs (21) anleuchtet.

6. Lagerregal nach einem der Ansprüche 1 bis 5, **gekennzeichnet durch** eine Bildauswertevorrichtung (80), die Bilder mehrerer Bereiche, welche mindestens den ersten Bereich (21) und einen zweiten Bereich (22) umfassen, aus verschiedenen Positionen der Verfahrvorrichtung (30) mittels der Bilderfassungseinheit (40) aufnimmt und zu einem Gesamtbild zusammenfügt.

7. Verfahren zum Erfassen eines Lagerbestands eines Lagerregals gemäß einem der Ansprüche 1 bis 6, aufweisend folgende Schritte:
a. Positionieren eines Lagergutträgers (20) in eine Bestückungs- und/oder Entnahmeöffnung (16) des Lagerregals (10);
b. Verfahren einer Bilderfassungseinheit (40) über einen Bereich des Lagergutträgers (20), in welchen ein Einlegen oder aus welchem ein Entnehmen von Lagergut (28) erfolgt;
c. Ausleuchten des Bereichs (21, 22);
d. Aufnehmen eines Bildes des Bereichs (21, 22);
e. Abspeichern, verarbeiten und auswerten des Bildes.

8. Verfahren nach Anspruch 7, **dadurch gekennzeichnet, dass** die Bilderfassungseinheit (40) Bilder mittels einer gleichbleibenden Brennweite erfasst und/oder eine gleichbleibende Ausrichtung zur Aufnahme des Bildes aufweist.

9. Verfahren nach Anspruch 7 oder 8, **dadurch gekennzeichnet, dass** die Bildauswertevorrichtung (80) das erfasste Bild des Bereichs (21, 22) derart zuschneidet, dass mindestens ein Ablagebereich (26) abgebildet wird.

10. Verfahren nach Anspruch 9, **dadurch gekennzeichnet, dass** die Bildauswertevorrichtung (80) vorzugsweise ein Gesamtbild des Lagergutträgers (20) durch eine Vielzahl an Abbildungen der Ablagebereiche (26) erstellt.

11. Verfahren nach Anspruch 10, **dadurch gekennzeichnet, dass** ein unbelegter Ablagebereich (26) auf dem Lagergutträger (20) in dem Gesamtbild des Lagergutträgers (20) visuell gekennzeichnet wird.

12. Verfahren nach einem der Ansprüche 7 bis 11, **dadurch gekennzeichnet, dass** mittels Bildererkennung ein Lagergut (28) in dem Ablagebereich (26) identifiziert wird und eine Information zu dem Lagergut (28) an einer Anzeigeeinheit (85) angezeigt wird.

13. Verfahren nach Anspruch 12, **dadurch gekennzeichnet, dass** eine Inventurliste automatisch erstellt wird oder nach dem Beschicken und/oder Entnehmen von Lagergut (28) aktualisiert wird.

## Claims

1. A storage rack (10) with a plurality of carrier supports (12) arranged one above the other for supporting stored goods carriers (20) which can be conveyed by means of an automatic transport device (14), with at least one loading and retrieval opening (16) for supplying and retrieving the stored goods carrier (20), an image acquisition unit (40) being arranged on an upper side (18) of the loading and retrieving opening (16), **characterized in that** the storage rack (10) has an illuminating device (50) for highlighting and illuminating a region (21) of the stored goods carrier (20) which is detected by the image acquisition unit (40), and wherein the image acquisition unit (40) and the illuminating device (50) are fastened to a traversing device (30) which transverses in a first horizontal direction (X) and in a second horizontal direction (Y).

2. The storage rack according to claim 1, **characterized in that** the image acquisition unit (40) for capturing an image is aligned substantially perpendicular to a storage surface (25) of the stored goods carrier (20).

3. The storage rack according to claim 1 or 2, **characterized in that** the traversing device (30) is arranged on rails (31, 32) arranged orthogonally to one another, wherein the traversing device (30) can be preferably positioned along the rails (31, 32) by means of a motor (34).

4. The storage rack according to one of claims 1 to 3, **characterized in that** the image acquisition unit (40) comprises a lens (45) with a fixed focal length.

5. The storage rack according to claim 4, **characterized in that** the illuminating device (50) illuminates the first region (21) of the storage surface (25) by means of a red light for highlighting the first region (21) or by means of a white light for illuminating the first region (21).

6. The storage rack according to one of claims 1 to 5, **characterized by** an image evaluation device (80) which captures images of several regions, which comprise at least the first region (21) and a second region (22), from different positions of the traversing device (30) by means of the image acquisition unit (40) and combines them into an overall image.

7. A method of detecting a stock level of a storage rack according to any one of claims 1 to 6, comprising the following steps:
a. Positioning of a stored goods carrier (20) in a loading and/or retrieving opening (16) of the storage rack (10);
b. Traversing an image acquisition unit (40) over a region of the stored goods carrier (20) into which stored items (28) are inserted or from which they are retrieved;
c. Illuminating the region (21, 22);
d. Capturing an image of the region (21, 22);
e. Storing, processing and evaluating the image.

8. The method according to claim 7, **characterized in that** the image acquisition unit (40) acquires images by means of a constant focal length and/or has a constant orientation for capturing the image.

9. The method according to claim 7 or 8, **characterized in that** the image evaluation device (80) crops the captured image of the region (21, 22) in such a way that at least one depositing region (26) is imaged.

10. The method according to claim 9, **characterized in that** the image evaluation device (80) preferably creates an overall image of the stored goods carrier (20) by means of a plurality of images of the depositing regions (26).

11. The method according to claim 10, **characterized in that** an unoccupied depositing region (26) on the stored goods carrier (20) is visually marked in the overall image of the stored goods carrier (20).

12. The method according to one of claims 7 to 11, **characterized in that** stored item (28) in the depositing region (26) is identified by means of image recognition and information about the stored item (28) is displayed on a display unit (85).

13. The method according to claim 12, **characterized in that** an inventory list is created automatically or is updated after the loading and/or retrieving of stored item (28).

## Revendications

1. Rayonnage de stockage (10) comprenant une pluralité d'éléments de soutien (12) disposés les uns au-dessus des autres pour soutenir des supports de produits à stocker (20) qui peuvent être transportés au moyen d'un dispositif de transport automatique (14), présentant au moins une ouverture de chargement et de déchargement (16) pour amener et prélever le support de produits à stocker (20), une unité d'enregistrement d'images (40) étant disposée sur une face supérieure (18) de l'ouverture de chargement et de déchargement (16),
**caractérisé en ce que** le rayonnage de stockage (10) comprend un dispositif lumineux (50) pour mettre en évidence et éclairer une zone (21) du support de produits à stocker (20) qui est enregistrée par l'unité d'enregistrement d'images (40), l'unité d'enregistrement d'images (40) et le dispositif lumineux (50) étant fixés à un dispositif de déplacement (30) apte à être déplacé dans une première direction horizontale (X) et dans une deuxième direction horizontale (Y).

2. Rayonnage de stockage selon la revendication 1,
**caractérisé en ce que**, pour prendre une image, l'unité d'enregistrement d'images (40) est orientée sensiblement perpendiculairement à une surface de stockage (25) du support de produits à stocker (20).

3. Rayonnage de stockage selon la revendication 1 ou 2,
**caractérisé en ce que** le dispositif de déplacement (30) est disposé sur des rails (31, 32) orthogonaux entre eux, de préférence, le dispositif de déplacement (30) étant apte à être positionné le long des rails (31, 32) au moyen d'un moteur (34).

4. Rayonnage de stockage selon l'une des revendications 1 à 3, **caractérisé en ce que** l'unité d'enregistrement d'images (40) comporte un objectif (45) à distance focale fixe.

5. Rayonnage de stockage selon la revendication 4,
**caractérisé en ce que** le dispositif lumineux (50) éclaire la première zone (21) de la surface de stockage (25) avec une lumière rouge pour mettre en évidence la première zone (21) ou avec une lumière blanche pour éclairer la première zone (21).

6. Rayonnage de stockage selon l'une des revendications 1 à 5, **caractérisé par** un dispositif d'évaluation d'images (80) qui prend des images de plusieurs zones, incluant au moins la première zone (21) et une deuxième zone (22), à partir de différentes positions du dispositif de déplacement (30) au moyen de l'unité d'enregistrement d'images (40) et qui les assemble en une image globale.

7. Procédé de détection d'un stock d'un rayonnage de stockage selon l'une des revendications 1 à 6, comprenant les étapes suivantes consistant à :
a. positionner un support de produits à stocker (20) dans une ouverture de chargement et/ou de déchargement (16) du rayonnage de stockage (10) ;
b. déplacer une unité d'enregistrement d'images (40) par-dessus une zone du support de produits à stocker (20) dans laquelle des produits à stocker (28) sont déposés ou prélevés ;
c. éclairer la zone (21, 22) ;
d. prendre une image de la zone (21, 22) ;
e. mémoriser, traiter et évaluer l'image.

8. Procédé selon la revendication 7,
**caractérisé en ce que** l'unité d'enregistrement d'images (40) enregistre des images avec une distance focale constante et/ou présente une orientation constante pour prendre l'image.

9. Procédé selon la revendication 7 ou 8,
**caractérisé en ce que** le dispositif d'évaluation d'images (80) découpe l'image enregistrée de la zone (21, 22) de manière à reproduire au moins une zone de dépôt (26).

10. Procédé selon la revendication 9,
**caractérisé en ce que** le dispositif d'évaluation d'images (80) crée de préférence une image globale du support de produits à stocker (20) à partir une pluralité d'images des zones de dépôt (26).

11. Procédé selon la revendication 10,
**caractérisé en ce qu'**une zone de dépôt (26) non occupée sur le support de produits à stocker (20) est identifiée visuellement dans l'image globale du support de produits à stocker (20).

12. Procédé selon l'une des revendications 7 à 11,
**caractérisé en ce qu'**un produit à stocker (28) dans la zone de dépôt (26) est identifié par reconnaissance d'images, et une information relative au produit à stocker (28) est affichée sur une unité d'affichage (85).

13. Procédé selon la revendication 12,
**caractérisé en ce qu'**une liste d'inventaire est établie automatiquement ou est mise à jour après le chargement et/ou le déchargement de produits à stocker (28).
